# EUROPEAN PATENT SPECIFICATION

(11) **EP 3 739 845 B1**
(45) Date of publication and mention of the grant of the patent: **22.11.2023**
(21) Application number: 19738224.5
(22) Date of filing: 07.01.2019
(51) Int. Cl.: G06F 9/50, H04L 67/1097, H04L 67/1095

(54) **BORROWING DATA STORAGE RESOURCES IN A DISTRIBUTED FILE SYSTEM**
AUSBORGEN VON DATENSPEICHERRESSOURCEN IN EINEM VERTEILTEN DATEISYSTEM
EMPRUNT DE RESSOURCES DE STOCKAGE DE DONNÉES DANS UN SYSTÈME DE FICHIERS DISTRIBUÉ

(30) Priority: 09.01.2018 CN 201810020116
(43) Date of publication of application: 18.11.2020
(73) Proprietor: ALIBABA GROUP HOLDING LIMITED, George Town, Grand Cayman (KY)
(72) Inventor: ZHU, Jiaji, Hangzhou, Zhejiang 311121 (CN)
(74) Representative: Patentgruppen A/S
(86) International application number: PCT/CN2019/070579
(87) International publication number: WO 2019/137320

(56) References cited:
- WO-A1-2017/050141
- CN-A- 105 320 570
- CN-A- 105 933 205
- CN-A- 106 230 997
- CN-A- 106 230 997
- JP-A- 2007 325 235
- SAGE A WEIL ET AL: "CEPH: A Scalable, High-Performance Distributed File System", TECHNICAL REPORT UCSC-SSRC-06-01, SANTA CRUZ , 1 March 2006 (2006-03-01), pages 307-320, XP002687633, Retrieved from the Internet: URL:http://www.ssrc.ucsc.edu/Papers/ssrctr -06-01.pdf [retrieved on 2012-11-21]

## Description

### Technical field

The present invention relates to the field of Internet technologies, and, more particularly, to a resource scheduling method and system.

### Background

In the era of information explosion, the amount of data generated by various network services has grown exponentially. In order to meet the storage capacity, data backup, and data security needs of massive data, distributed file system clusters have emerged as the times require. In simple terms, a distributed file system cluster is composed of a group of servers that provide complete service computational logic.

In an application scenario, a distributed file system cluster may be shared by multiple different services, or may be shared by multiple different tasks or sub-services of a service. At this point, the distributed file system cluster may be divided into multiple cluster instances (or may be referred to as unit clusters, subcluster, etc.); each cluster instance may be used by at least one service or task. Each cluster instance includes its own metadata server (MS) and a plurality of data servers (CS).

Currently, when the increase of data generated by the service leads to insufficient resources of the distributed file system cluster, the resources of the distributed file system are increased through a separate expansion, such as increasing the number of CSs contained in one or several cluster instances. However, more and more services have greater fluctuations in data volume. For example, a certain service may have a sudden increase in data volume temporarily. At this time, the expansion method may be adopted. On the one hand, since the expansion is triggered only when a significant increase in data volume is detected, the timeliness of the expansion cannot meet the real-time processing requirements of the current sudden increase in data volume. On the other hand, adopting the expansion method in order to cope with the sudden increase in data volume usually wastes a lot of resources.

JP 2007 325235 A discloses an electronic apparatus borrowing resources of other electronic apparatuses. CN 106 230 997 A discloses a resource scheduling method assessing current load amount of a first module and when relevant determining a to-be-scheduled module from a second cluster and setting this module as the first module of the first cluster. WO 2017/050141 A1 discloses a distributed storage-based file delivery system and method.

### Summary

In view of the problem, example embodiments of the present invention provide a resource scheduling method and system to achieve reusing resources among cluster instances and improve the resource utilization rates of the clusters.

The invention is set out in the appended set of claims. In the resource scheduling method and system provided by the example embodiments of the present invention, when the available resources of the first cluster instance are insufficient, the first cluster instance may send a resource borrowing request to the second cluster instance for borrowing the resources of the second cluster instance. Specifically, the second cluster instance first determines the borrowable data server resources in the second cluster instance, and returns the borrowable resources information representing the borrowable data server resources to the first cluster instance, such that the first cluster instance acquires the borrowable data service resources for data processing. Based on this, when available resources of one cluster instance are insufficient, the resources of other cluster instances may be borrowed, thereby achieving resource reuse among the cluster instances, fully utilizing the resources of each cluster instance, and enhancing the resource utilization rates of the clusters.

### Brief description of drawings

To describe the technical solutions in the example embodiments of the present invention or in the prior art more clearly, the following briefly describes the accompanying drawings needed for describing the example embodiments or the prior art. Apparently, the accompanying drawings in the following description show some example embodiments of the present invention, and a person of ordinary skill in the art may still derive other accompanying drawings from these accompanying drawings without creative efforts.
FIG. 1 is a schematic diagram of a resource scheduling system according to an example embodiment of the present invention;
FIG. 2 is a flowchart of a resource scheduling method according to an example embodiment of the present invention;
FIG. 3 is a schematic diagram of a resource scheduling process on the basis of FIG. 1;
FIG. 4 is a flowchart of another resource scheduling method according to an example embodiment of the present invention;
FIG. 5 is a flowchart of still another resource scheduling method according to an example embodiment of the present invention;
FIG. 6 is an interaction diagram of a resource scheduling method according to an example embodiment of the present invention;
FIG. 7 is a schematic structure diagram of a resource scheduling apparatus according to an example embodiment of the present invention;
FIG. 8 is a schematic structure diagram of an electronic device corresponding to the resource scheduling apparatus shown in FIG. 7; and
FIG. 9 is a schematic structure diagram of another resource scheduling system according to an example embodiment of the present invention.

### Detailed description

In order to make the object, technical solutions, and advantages of the example embodiments of the present invention clearer, the technical solutions in the example embodiments of the present invention will be described clearly and completely hereinafter in conjunction with the drawings in the example embodiments of the present invention. Apparently, the described example embodiments are a part of the example embodiments of the present invention, rather than all example embodiments. Other example embodiments obtained by a person of ordinary skill in the art based on the example embodiments of the present invention without creative efforts all fall as long as encompassed within the scope of the present invention as defined by the appended claims.

Terms used in the example embodiments of the present invention are for the purpose of describing specific example embodiments only and are not intended to limit the present invention. Unless otherwise noted in the context, the singular forms "a", "an", "the" and "said" used in the example embodiments and appended claims of the present invention are also intended to represent plural forms thereof. "A plurality of" generally includes at least two, but including at least one should not be excluded.

It should be appreciated that the term "and/or" used herein is merely an association relationship describing associated objects, indicating that there may be three relations; for example, A and/or B may indicate the following three cases: A exists individually, A and B exist simultaneously, and B exists individually. In addition, the character "/" herein generally indicates that the related objects before and after the character form an "or" relation.

Depending on the context, the term "if' as used herein may be interpreted as "when," or "in the case that," or "in response to a determination," or "in response to a detection." Similarly, depending on the context, the phrase "if determined" or "if detected (stated condition or event)" may be interpreted as "when determined" or "in response to a determination," or "when detected (stated condition or event)" or "in response to detecting (stated condition or event)."

It should also be noted that the term "comprise", "include", or any other variant thereof is intended to encompass a non-exclusive inclusion, so that a product or system that involves a series of elements comprises not only those elements, but also other elements not explicitly listed, or elements that are inherent to such a product or system. Without more restrictions, an element defined by the phrase "including a ..." does not exclude the presence of another same element in the product or system that comprises the element.

In addition, the sequence of steps in the following method example embodiments is only an example, and is not to impose a strict limitation insofar it is encompassed within the scope of the invention as defined by the appended claims.

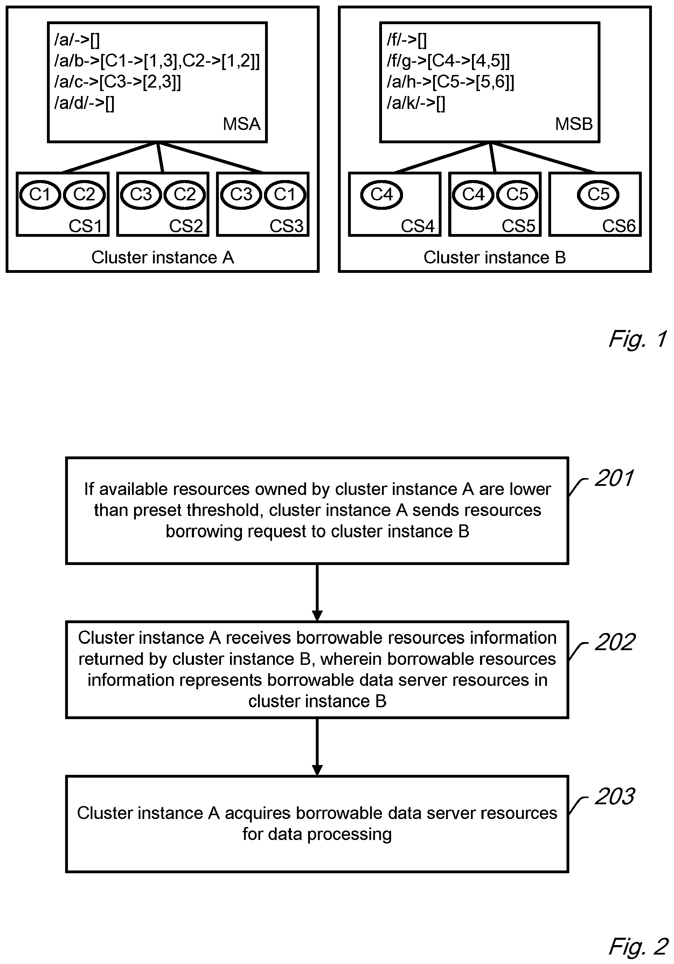

FIG. 1 is a schematic diagram of a resource scheduling system according to an example embodiment of the present invention. The resource scheduling system comprises a plurality of cluster instances, which may be any specific subcluster in a distributed file system cluster. Each cluster instance includes a metadata server (MS) and a plurality of data servers (CS). In general, a user's file is divided into chunks and stored on different CSs. In order to ensure that the data is not lost, the chunks are stored as a plurality of replicas. The MS is responsible for managing metadata information of the cluster instance. The metadata information mainly includes directory and file space, a chunk list of the file, on which CSs these chunks are stored, etc. When the machine disk of a CS is damaged, the MS is also responsible for triggering a replication task to replicate missing chunk replicas to other CSs, so as to ensure the data reliability. The CS is responsible for managing reading and writing all local chunks, and periodically reports its state to the MS and synchronizes metadata information of the chunks. The metadata information of the chunks includes chunk lengths, version numbers, the last modification time, etc. When a task worker of a client needs to access a file, it first queries the MS for metadata information of the file so as to request corresponding data from the nearest corresponding CS according to the location of chunk replicas.

It is worth noting that the above metadata server and data server may also be referred to as namenodes and datanodes. Therefore, no matter how they are called, as long as they fit the above functional description for devices that constitute a specific cluster, they fall within the scope of the example embodiments of the present invention.

For ease of description, as shown in FIG. 1, the resource scheduling system shown therein comprises at least a first cluster instance (a cluster instance A) and a second cluster instance (a cluster instance B). The cluster instance A includes a metadata server MSA and a plurality of data servers CS1, CS2, and CS3; the cluster instance B includes a metadata server MSB and a plurality of data servers CS4, CS5, and CS6.

As mentioned earlier, each MS records all the directories and file spaces of the cluster instances corresponding to each MS, the chunk list of each file, and the CSs on which each chunk is stored. Therefore, as shown in FIG. 1, it is assumed that the file and directory space recorded by the MSA include: /a/, /a/b, /a/c, and /a/d/; a chunk list of each file: for example, the file /a/b has two chunks, C1 and C2; and for another example, "I" at the end of /a/ and /a/d/ indicates a directory and no chunks are present; the list is thus null []; and on which CSs each chunk is stored: for example, C1-> [1,3] indicates that chunk C1 is stored on CS1 and CS3. It is assumed that the file and directory space recorded by the MSB include: /f/, /f/g, /f/h, and /f/k/; and the chunk list of each file: for example, the file /f/g has one chunk, C4; and on which CSs each chunk is stored; for example, C4-> [4,5] indicates that chunk C4 is stored on CS4 and CS5.

Based on the resource scheduling system shown in FIG. 1, the core idea of the resource scheduling method provided by the example embodiments of the present invention is: when the available resources of one cluster instance are insufficient, the resources of other cluster instances may be borrowed; in addition, when the available resources of the cluster instance are restored and sufficient, the borrowed resources may then be returned. Thus, resources sharing among different cluster instances is achieved.

The resource scheduling method provided by the example embodiment of the present invention will be described from the perspective of the cluster instance A and the cluster instance B respectively in what follows.

FIG. 2 is a flowchart of a resource scheduling method according to an example embodiment of the present invention. The resource scheduling method provided by this example embodiment may be executed by the cluster instance A shown in FIG. 1, or optionally, may be specifically executed by the metadata server MSA in the cluster instance A. The following example embodiment is illustrated using the MSA executing the resource scheduling method as an example. As shown in FIG. 2, the method includes the following steps:
201, if available resources owned by the cluster instance A are lower than a preset threshold, the cluster instance A sends a resource borrowing request to a cluster instance B.
202, the cluster instance A receives borrowable resources information returned by the cluster instance B, wherein the borrowable resources information represents borrowable data server resources in the cluster instance B.
203, the cluster instance A acquires the borrowable data server resources for data processing.

In the example embodiment of the present invention, the available resources owned by a cluster instance refer to the resources available for a plurality of CSs initially registered with the cluster instance.

In an optional example embodiment, one service or multiple services may be running on one cluster instance; and different services may be set with different priorities. For example, assuming that an online shopping service is run on a cluster instance whereas a big data analysis service is run on another cluster instance; then the online shopping service may be set to be prioritized and the big data analysis service is set to have a lower priority. Accordingly, in order to make sure that the operation of the high-priority service is prioritized, it is necessary to ensure that the resources for the cluster instance on which the high-priority service is run are guaranteed first. In general, the resources of the cluster instance on which the high-priority service is run are not shared with other low-priority services. Instead, the cluster instance on which the high-priority service is run may borrow the resources of the cluster instance on which the low-priority service is run.

On the basis of this, assuming that the service priority of the cluster instance A is higher than that of the cluster instance B, then when the resources of the cluster instance A are tight, it is desirable that the resources of the cluster instance B may be borrowed. In an optional example embodiment, the MSA and the MSB may be configured in advance. The configuration content for the MSA may include: an access address of the MSB, and a maximum threshold of the resources in the cluster instance B that are allowed for borrowing, i.e., the upper limit of the borrowable resource threshold. The configuration content for the MSB may include an access address and the like of the MSA of the cluster instance A that borrows resources from the cluster instance B. The access address may be an IP address + a port number, or a Uniform Resource Locator (URL) address. The maximum resources threshold may be a threshold of dimensions such as the maximum number of CSs, the maximum bandwidth, and the maximum storage capacity.

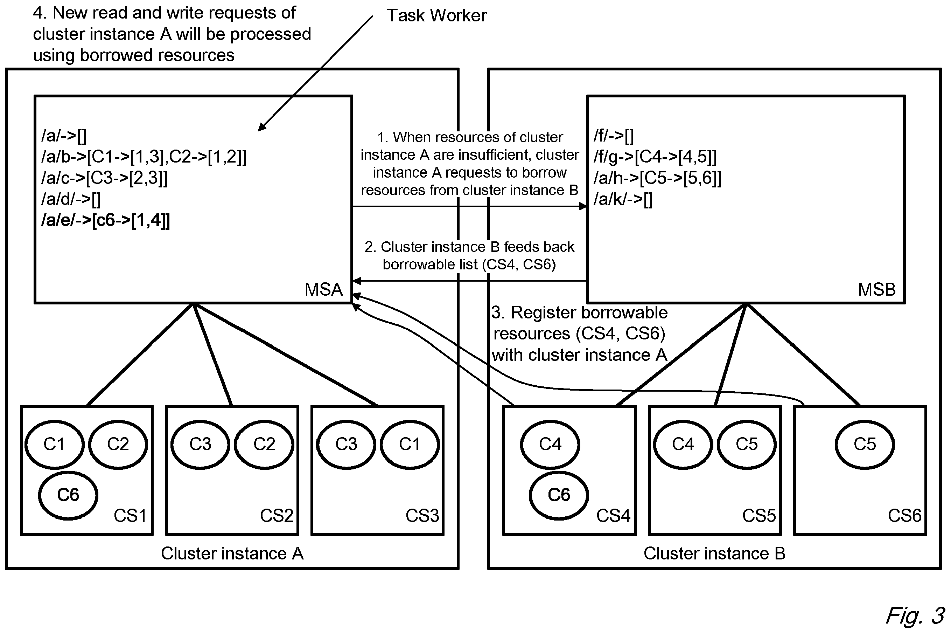

Based on the above configuration, as shown in FIG. 3, when the MSA discovers that the available resources of the cluster instance A are insufficient, such as the available resources become insufficient when the capacity of the cluster instance A or the requested traffic is close to the peak load, then the borrowing process may be initiated, such that a request for borrowing resources may be sent to the cluster instance B. At this time, the MSA sends a resource borrowing request to the MSB based on the configured access address of the MSB of the cluster instance B having the borrowable resources.

In an optional example embodiment, the resource borrowing request may include a service priority corresponding to the cluster instance A. The service priority is used to determine, according to the service priority, whether to respond to the resource borrowing request sent by the cluster instance A when a resource borrowing request from another cluster instance is simultaneously received by the cluster instance B. That is, assuming that several resource borrowing requests are simultaneously received by the MSB of the cluster instance B, the cluster instance B may then determine to respond to the resource borrowing request with the highest service priority according to the service priority carried in each resource borrowing request.

In another optional example embodiment, the resource borrowing request may further include expected resources information, which describes how many resources that need to be borrowed. The expected resources information enables the MSB to determine, from the plurality of CSs included in the cluster instance B, one or several borrowable CSs that conform to the expected resources information.

When a resource borrowing request includes a service priority and expected resources information, and assuming that the service priorities in at least two resource borrowing requests are equal and higher than the service priorities in other resource borrowing requests, optionally, one resource borrowing request may be randomly selected from the at least two resource borrowing requests for responding; or a resource borrowing request with the minimum or maximum required amount of resources for borrowing corresponding to the expected resources information may be selected from the at least two resource borrowing requests for responding.

Herein, the expected resources information may be determined according to the following manner: the expected resources information is determined according to a load condition of the cluster instance A and a preset upper-limit threshold of borrowable resources. For example, assuming that the pre-configured upper-limit threshold for the resources that the cluster instance A may borrow from the cluster instance B is 100 CSs, then it may be configured that when the load of the cluster instance A is 30% over the load capacity, the expected borrowing amount is 30 CSs; and when the load is 50% over the load capacity, the expected borrowing amount is 50 CSs. The load may be a ratio of the used storage capacity of the cluster instance A to the total storage capacity thereof.

Optionally, the above resource borrowing request may not carry the expected resources information. At this time, the MSB may determine, based on factors such as the load of the cluster instance B and the remaining resources conditions, whether to allow the cluster instance A to borrow resources and how many resources of the CSs may be specifically borrowed. The resources are generally reflected as bandwidth resources and storage capacity resources.

In an optional example embodiment, after the MSB determines the borrowable CSs, a borrowing notification may be sent to the borrowable CSs to notify the borrowable CSs that they are lent to the cluster instance A. The borrowing notification may carry information such as bandwidth requirements and storage space requirements; the information may be determined according to one or various factors of the afore-mentioned expected resources information, the load of the cluster instance B, and the remaining resources conditions of each CS in the cluster instance B. At this point, the borrowable CSs may allocate the corresponding bandwidth resources and storage space under the bandwidth requirement and storage space requirement conditions; the borrowable CSs may further create a file directory, as /a/e shown in FIG. 3 for storing subsequent data from the cluster instance A. Consequently, the borrowable CSs may feed the created file directory, allocated bandwidth, and storage space back to the MSB, such that the MSB creates borrowable resources information.

As a result, when receiving the resource borrowing request from the cluster instance A, the MSB in the cluster instance B returns borrowable resources information to the cluster instance A. The borrowable resources information represents the borrowable CSs resources in the cluster instance B. Herein, the borrowable CSs resources may indicate the CSs that may be borrowed, and may further indicate the amount of the storage space, the amount of bandwidth, and the file directories in the borrowable CSs that may be borrowed. As shown in FIG. 3, after determining the borrowable CSs resources as CS4 and CS6 in the figure, the MSB may send borrowable resources information to the MSA. The borrowable resources information may be organized in the format of a list, which may include identifiers of the borrowable CSs, such that the MSA is notified of the CSs lent thereto.

After receiving the borrowable resources information returned by the MSB of the cluster instance B, the MSA of the cluster instance A may acquire the corresponding borrowable CSs resources.

In an optional example embodiment, since the borrowable resources information describes the CSs resources in the cluster instance B that may be borrowed by the cluster instance A, the borrowable resources information may be written into the metadata information maintained by the MSA. It is thus believed that the borrowable CSs resources are acquired.

In another optional example embodiment, in order to facilitate the use of the borrowed resources by the cluster instance A, the borrowable CSs resources in the cluster instance B may be registered with the cluster instance A through a registration process. At this point, after determining the borrowable CSs resources, the MSB may send a borrowing notification to the borrowable CSs. In addition to triggering the borrowable CSs to allocate and create resources such as the afore-mentioned specific borrowable bandwidth, storage space, and file directories, the borrowing notification may further trigger the process of registering the borrowable CSs with the cluster instance A. Specifically, the borrowable CSs may send a registration request to the MSA to join the cluster instance A. The MSA then discovers that the borrowable CSs are included in the received borrowable resources information, responds to the registration request, and completes the registration. Through the registration process, the borrowable CSs would then be belonging to both the cluster instance A and the cluster instance B.

It is worth noting that although the borrowable CSs may be belonging to both the cluster instance A and the cluster instance B, the resources available to the borrowable CSs are divided into two separate parts, with one part being exclusively used by the cluster instance A and the other part being exclusively used by the cluster instance B.

In addition, optionally, after the MSB determines the borrowable CSs resources, the borrowable CSs may be marked in a borrowed state.

On the basis of this, the cluster instance A borrows resources from the cluster instance B. Thereafter, for new data processing requests such as data read and write requests that the cluster instance A receives, the borrowed resources may be used to process the data processing requests, the capacity and traffic pressure of the cluster instance A is thus shared. For example, when the MSA shown in FIG. 3 receives a data write request from a task worker, the chunk C6 requested for storage may then be written into CS1 and the borrowed CS4.

In addition to using the borrowed resources to process new data processing requests, optionally, the cluster instance A may also migrate some chunk replicas therein to the borrowed resources; that is, some chunk replicas of the CSs originally stored in the cluster instance A, for example, in CS1, CS2, and CS3 in FIG. 3, may be migrated to the borrowed resources.

It is worth noting that when the cluster instance A uses the borrowed resources, normally only some chunk replicas are moved to the borrowed resources, such that the cluster instance A still keeps all the chunks with the ability to provide services independently. For example, if originally a chunk in the cluster instance A has 3 replicas, one of the replicas will be migrated to the borrowed resources after the borrowed resources are available. As a result, the cluster instance A still have two replicas for reading and writing data independently even in the case when the borrowed resources become unavailable.

In summary, when the available resources of one cluster instance are insufficient, this cluster instance may negotiate with other cluster instances to borrow resources therefrom, thereby achieving resources reuse among the cluster instances, fully utilizing the resources of each cluster instance, and enhancing the resource utilization rates of the clusters.

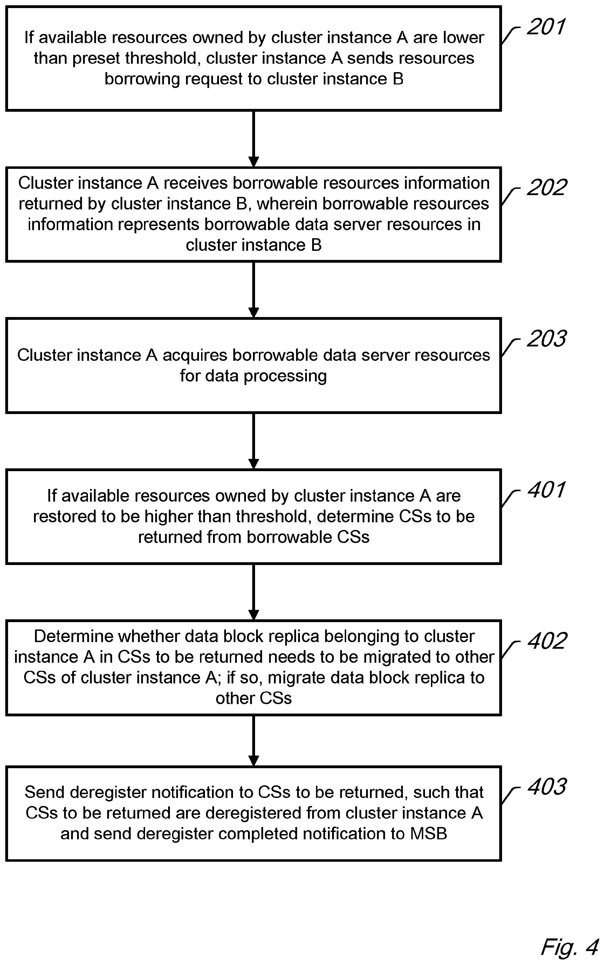

FIG. 4 is a flowchart of another resource scheduling method according to an example embodiment of the present invention. As shown in FIG. 4, which is based on the example embodiment shown in FIG. 2, after step 203, the method may further include the following steps:
401, if the available resources owned by the cluster instance A are restored to be higher than a threshold, determine CSs to be returned from the borrowable CSs.
402, determine whether a data block replica belonging to the cluster instance A in the CSs to be returned needs to be migrated to other CSs of the cluster instance A; if so, migrate the data block replica to the other CSs.
403, send a deregister notification to the CSs to be returned, such that the CSs to be returned are deregistered from the cluster instance A and send a deregister completed notification to the MSB.

The above steps may be performed by the MSA of the cluster instance A.

After the resources owned by the cluster instance A are restored and sufficient, for example, the available resources of the cluster instance A are restored and become sufficient through expanding or reducing access traffic, the cluster instance A may return all or part of the borrowed resources. Whether to return all or part of the borrowed resources may be determined by considering how sufficient the available resources owned by the cluster instance A are. For example, when the available resources owned by the cluster instance A are greater than a first preset threshold, it is determined that all borrowed resources are to be returned; and when the available resources owned by the cluster instance A are greater than a second preset threshold but less than the first preset threshold, it is determined that part of the borrowed resources are to be returned; the first preset threshold is greater than the second preset threshold.

Herein, the available resources owned by the cluster instance A in step 401 refer to resources other than the borrowed resources. As shown in FIG. 3, assuming that the cluster instance A has borrowed CS4 and CS6 from the cluster instance B, the resources that may be used by the cluster instance A at this point include: CS1, CS2, CS3, CS4, and CS6. However, only CS1, CS2, and CS3 that are originally registered with the cluster instance A are the resources owned thereby, which are the owned available resources described in step 401.

Therefore, in combination with the assumption in FIG. 3 in which the cluster instance Aborrows CS4 and CS6 from the cluster instance B, in an optional example embodiment, when the available resources owned by the cluster instance A are restored to be higher than the first preset threshold, all the resources borrowed by the cluster instance A, namely CS4 and CS6, may be returned to the cluster instance B. At this point, step 402 may be directly performed. In another optional example embodiment, when the available resources owned by the cluster instance A are restored to be greater than the second preset threshold but less than the first preset threshold, part of the borrowed resources are returned. At this point, the CSs to be returned will need to be determined from all the borrowable CSs.

Specifically, the CSs to be returned may be determined according to the service quality and/or usage rate of each borrowable CS. For example, the borrowable CSs with less use frequency may be determined to be the CSs to be returned, or the borrowable CSs with poor service quality may be determined to be the CS to be returned. Herein, the service quality metrics may be the number of times data are read and written per unit time, the bandwidth that may be provided, etc. The use frequency may be a ratio of the cluster instance A processing the received data read and write requests using the borrowable CSs to the total number of received data read and write requests since the borrowable CSs become available. A corresponding threshold may be configured as a basis for determining the CSs to be returned.

After the MSA determines the CS to be returned, these CSs to be returned will not be used afterwards.

Following the previous example, assuming that the MSA determines that the CS to be returned from the borrowed CS4 and CS6 is CS4; and during the period of borrowing CS4 by the cluster instance A, the data of the cluster instance A would be stored in CS4. Thus, before CS4 is returned to the cluster instance B, whether chunk replicas of the cluster instance A stored in CS4 need to be migrated to other CSs of the cluster instance A has to be determined, so as to meet data security and availability needs. If it is determined that the migration is needed, the chunk replicas in CS4 may be replicated to other CSs in the cluster instance A.

Several chunk replicas of the cluster instance A are stored in CS4. With regard to any chunk replica, whether the chunk replica needs to be migrated may be determined using the following manners.

If the chunk replicas are deleted such that a total number of data blocks corresponding to the chunk replicas is less than a preset number, determining that the chunk replicas need to be migrated to the other CSs. Specifically, since the MSA records the chunk replicas that are stored in each CS, i.e., the MSA knows which CSs store the same chunk replica, for any chunk replica stored in CS4, the MSA may determine the CSs on which the chunk replica is also stored; the MSA may then be able to determine a total number of the chunk replicas. Assuming that the total number is N, and assuming that the preset number described above is M; if it is determined that CS4 is to be returned, then the number of the chunk replicas becomes (N-1). If (N-1) ≥ M, it is determined that the chunk replica does not need to be migrated; otherwise, it is determined that the chunk replica needs to be migrated; N and M are both integers greater than or equal to 1.

After the chunk replicas in CS4 that need to be migrated are migrated, the MSA may send to CS4 a deregister notification, such that CS4 may be deregistered from the cluster instance A. After the deregister of CS4 is completed, a deregister completed message may be sent to the MSA; the MSA may thus delete information related to CS4 from the borrowable resources information. In addition, after the deregister of CS4 is completed, a deregister completed notification may further be sent to the MSB to notify the MSB that CS4 has been deregistered from the cluster instance A. At this point, the MSB may change the marking of CS4 from the borrowed state to not-borrowed state. Meanwhile, CS4 may further retrieve the file directory space created for the cluster instance A, such as /a/e in FIG 3.

In summary, each cluster instance has strong independence and may dynamically borrow resources from or lend resources to other cluster instances according to its own load, i.e., whether the available resources thereof are sufficient or not. Each cluster instance may reuse resources more flexibly and enhance the resources utilization rates of the clusters.

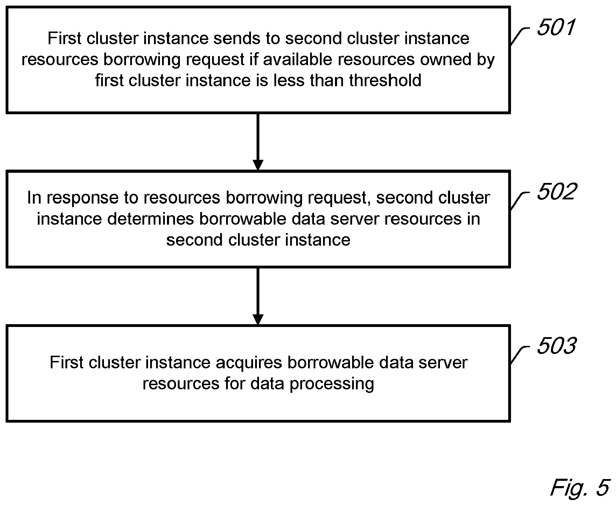

FIG. 5 is a flowchart of still another resource scheduling method according to an example embodiment of the present invention. As shown in FIG. 5, the method comprises the following steps:
501, a first cluster instance sends to a second cluster instance a resource borrowing request if available resources owned by the first cluster instance is less than a threshold;
502, in response to the resource borrowing request, the second cluster instance determines borrowable data server resources in the second cluster instance; and
503, the first cluster instance acquires the borrowable data server resources for data processing.

In this example embodiment, the above first cluster instance may be the cluster instance A shown in FIG. 1, and the second cluster instance may be the cluster instance B shown in FIG. 1.

In actual applications, the MSA in the cluster instance A may send a resource borrowing request to the MSB of the cluster instance B when the MSA discovers that the available resources of the cluster instance A are less than the threshold. Optionally, when detecting that the remaining storage space and available bandwidth of the cluster instance A are lower than a certain threshold, the MSA may send a resource borrowing request to the MSB of the cluster instance B according to the configuration information pre-allocated to the MSA. As described in the foregoing example embodiment, the configuration information includes the access addresses of the MSs of the cluster instance from which the cluster instance A may borrow resources when the available resources of the cluster instance A are insufficient. Therefore, when the access address of the MSB is allocated to the configuration information, the MSA may send a resource borrowing request to the MSB according to the access address.

As described in the foregoing example embodiment, the resource borrowing request may include parameters such as a service priority corresponding to the cluster instance A, expected resources information, and the like. When the resource borrowing request includes the expected resources information, the MSB determines, from the cluster instance B, the borrowable CSs resources that conform to the expected resources information. The expected resources information describes requirements such as the number of CSs, network distance, and storage capacity that the cluster instance A expects to obtain. Therefore, the MSB may select one CS or a combination of several CSs satisfying the requirement as borrowable CSs resources according to the load and storage capacity of each CS in the cluster instance B.

Further, optionally, in addition to the perspective in which the borrowable CSs resources are reflected in terms of which CSs may be borrowed, the CS resources may be further reflected as the specific resources in the CSs. On the basis of this, the MSB may first select several borrowable CSs that conform to the expected resources information, and then send a borrowing notification to these borrowable CSs, such that the borrowable CSs may allocate specific resources such as file directories, storage space, bandwidth, etc.; and the allocated resources are fed back to the MSB to form more detailed borrowable CSs resources.

After determining the borrowable CSs resources, the MSB may feed back to the MSA the borrowable resources information characterizing the borrowable CSs resources; the cluster instance A may then be able to acquire the corresponding borrowable CSs resources. Herein, reference regarding the process in which the cluster instance A acquires the borrowable CSs resource may be made to the description in the foregoing example embodiment, which are not repeated herein.

In addition, the borrowable CSs may further trigger registration with the cluster instance A based on the borrowing notification. Specifically, after receiving the borrowing notification, the borrowable CSs may send a registration request to the cluster instance A to proceed with the registration with the cluster instance A.

Optionally, after the MSB determines the borrowable CSs in the cluster instance B, the borrowable CSs may be marked with a borrowed state to indicate that the cluster instance A has borrowed the borrowable CSs.

In an optional example embodiment, when the available resources owned by the cluster instance A are restored and sufficient, the cluster instance A may return all or part of the borrowed resources. When the MSA determines, from the above-mentioned borrowable CSs provided thereto, the CSs to be returned, the return process shown in FIG. 4 is triggered. In the return process, the MSA would send a deregister notification to the CSs to be returned, such that the CSs to be returned are deregistered from the cluster instance A. After the CSs to be returned are deregistered from the cluster instance A, a deregister completed notification is sent to the MSB to inform the MSB that the CSs to be returned have been deregistered from the cluster instance A. In response to the deregister completed notification sent by the CSs to be returned, the MSB may delete the borrowed state marking of the CSs to be returned; thus, the cluster instances B may continue using the CSs to be returned afterwards.

In an optional example embodiment, due to reasons like a failure of a CS, the CS needs to be logged off, i.e., deleting the CS from the corresponding cluster instance. If the CS serves multiple cluster instances, i.e., in the case where other cluster instances have borrowed the CS, the following process may be referred to for a safe logoff process.

In the following, CS4 in the example embodiment shown in FIG. 3 that needs to be logged off is used as an example. Since CS4 is originally registered with the cluster instance B, a logoff notification regarding CS4 will be sent to the MSB of the cluster instance B. At this point, since the cluster instance A has borrowed CS4, a borrowable CS, the logoff process for the borrowable CS--CS4 is as follows.

First, after receiving the logoff notification regarding CS4, the MSB migrates the chunk replicas corresponding to the cluster instance B in CS4 to other CSs of the cluster instance B to ensure the data security and availability needs.

Second, the MSB sends a logoff notification to the MSA according to the borrowed state marking of CS4, so that the MSA performs a return process for CS4. Herein, since the borrowing state marking indicates that the MSA has borrowed CS4, a logoff notification may be sent to the MSA through the pre-configured access address of the MSA. The return process of the MSA is the process of performing steps 402 to 403 shown in FIG. 4, where the CS to be returned is the CS4 carried in the logoff notification.

Finally, if the chunk replicas of the cluster instance B stored on CS4 have been migrated to other CSs, and a notification message indicating that the return is done is received, such as the logoff notification mentioned in the foregoing example embodiment, it is then confirmed that specific logoff processing may be performed.

Based on the above logoff processing flow, the data security and availability of the CS that is logged off is guaranteed.

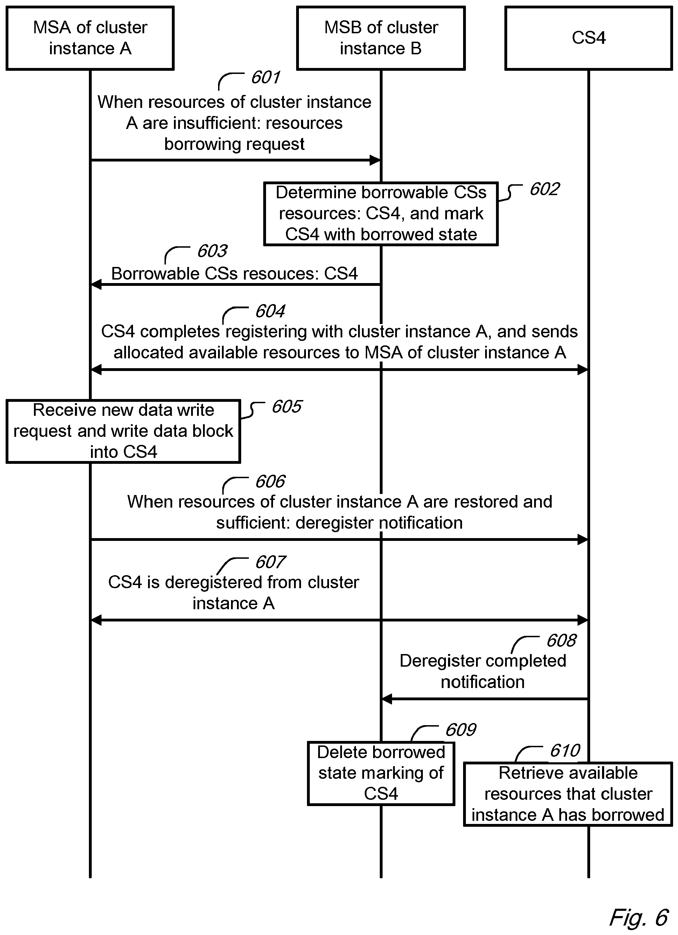

FIG. 6 is an interaction diagram of a resource scheduling method according to an example embodiment of the present invention. As shown in FIG. 6, the method may comprise the following steps:
601, the MSA of the cluster instance A may send a resource borrowing request to the MSB of the cluster instance B when the resources of the cluster instance A are insufficient.
602, the MSB of the cluster instance B determines the borrowable CSs resources: CS4, and mark CS with a borrowed state.

In an optional example embodiment, the step 602 may specifically include: the MSB determines borrowable CSs, sends a borrowing notification to the borrowable CSs so that the borrowable CSs allocate specific borrowable resources, thereby determining the borrowable CS resources, and obtain the borrowable resources information characterizing the borrowable CSs resources.

603, the MSB of the cluster instance B returns the borrowable resources information, CS4, to the MSA of the cluster instance A.

604, CS4 completes registering with the cluster instance A.

605, the MSA of the cluster instance A receives a new data write request and writes a data block into CS4.

606, the MSA of the cluster instance A sends a deregister notification to CS4 when the resources of the cluster instance A are restored and sufficient.

607, CS4 is deregistered from the cluster instance A.

608, CS4 sends a deregister completed notification to the MSB of the cluster instance B.

609, the MSB of the cluster instance B deletes the borrowed state marking of CS4.

610, CS4 retrieves the available resources that the cluster instance A has borrowed.

The above example embodiment simply illustrates the borrowing and returning processes described in the previous example embodiments. Reference regarding the specific execution process may be made to the description in the foregoing corresponding example embodiments.

A resource scheduling apparatus of one or more example embodiments of the present invention will be described in detail below. Those skilled in the art may appreciate that all of these resource scheduling apparatuses may be formed by configuring and using commercially available hardware components through the steps taught in this solution.

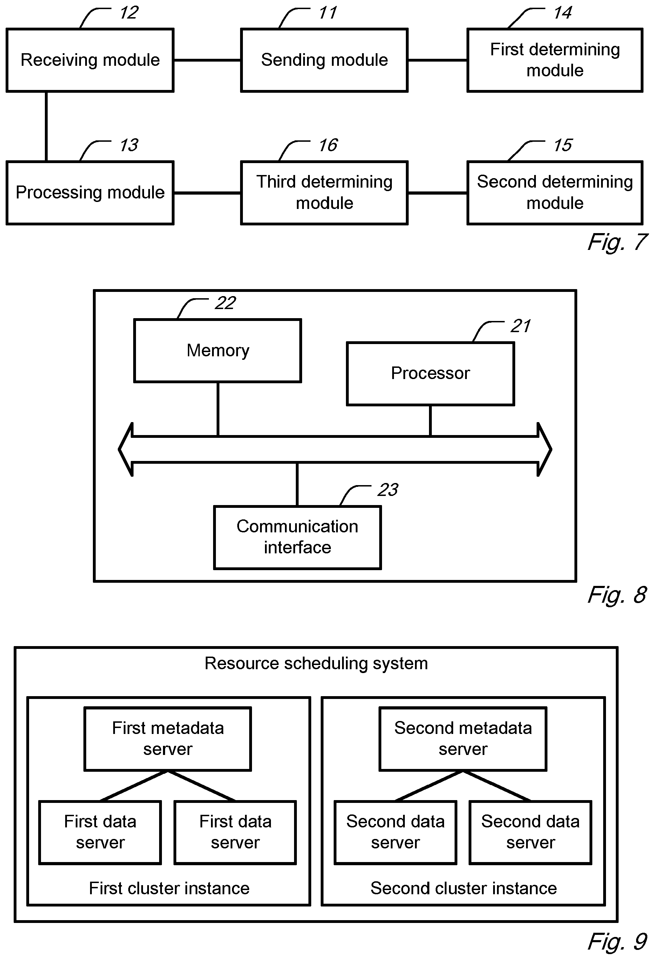

FIG. 7 is a schematic structure diagram of a resource scheduling apparatus according to an example embodiment of the present invention. The resource scheduling apparatus may be applied to the MSA of the cluster instance A shown in FIG. 1. As shown in FIG. 7, the apparatus comprises: a sending module 11, a receiving module 12, and a processing module 13.

The sending module 11 is configured to be used by a first cluster instance to send a resource borrowing request to a second cluster instance if available resources owned by the first cluster instance is less than a threshold.

The receiving module 12 is configured to receive borrowable resources information returned by the second cluster instance, wherein the borrowable resources information represents borrowable data server resources in the second cluster instance.

The processing module 13 is configured to be used by the first cluster instance to acquire the borrowable data server resources for data processing.

Optionally, the resource borrowing request includes a service priority corresponding to the first cluster instance and expected resources information, wherein the service priority is used to enable the second cluster instance to determine, according to the service priority, whether to respond to the resource borrowing request of the first cluster instance when a resource borrowing request sent by another cluster instance is simultaneously received by the second cluster instance; the expected resources information is used to enable the second cluster instance to determine the borrowable resources information conforming to the expected resources information.

In an optional example embodiment, the apparatus may further include: a first determining module 14.

The first determining module 14 is configured to determine, according to a load condition of the first cluster instance and a preset upper limit threshold of borrowable resources, the expected resources information.

In an optional example embodiment, the processing module 13 is further configured to: if a registration request sent by the borrowable data server is received, perform the registration of the borrowable data server with the first cluster instance.

In an optional example embodiment, the processing module 13 is further configured to migrate some data block replicas in the first cluster instance to the borrowable data server resources.

In an optional example embodiment, the apparatus further includes a second determining module 15 and a third determining module 16.

The second determining module 15 is configured to determine a data server to be returned from borrowable data servers if the available resources owned by the first cluster instance are restored to be higher than a threshold.

The third determining module 16 is configured to determine whether data block replicas belonging to the first cluster instance in the data server to be returned need to be migrated to other data servers of the first cluster instance.

Accordingly, the processing module 13 is further configured to: if the third determining module 16 determines that migration is needed, migrate the data block replicas to the other data servers.

The sending module 11 is further configured to send a deregister notification to the data server to be returned, so that the data server to be returned is deregistered from the first cluster instance, and send a deregister completed notification to the second cluster instance.

Optionally, the second determining module 15 is specifically configured to determine, according to service quality and/or utilization rates of the borrowable data servers, the data server to be returned from the borrowable data servers.

Optionally, the third determining module 16 is specifically configured to: if the data block replicas are deleted such that a total number of data blocks corresponding to the data block replicas is less than a preset number, determine that the data block replicas need to be migrated to the other data servers.

The apparatus shown in FIG. 7 may execute the methods in the example embodiments shown in FIG. 2 and FIG. 4. Reference regarding the parts that are not described in detail in this example embodiment may be made to the related description of the example embodiments shown in FIG. 2 and FIG. 4. Reference with regard to the implementation process and technical effect of this technical solution may be made to the description of the example embodiments shown in FIG. 2 and FIG. 4. Details are not repeated herein.

The internal functions and structure of the resource scheduling apparatus have been described above. In one possible design, the structure of the resource scheduling apparatus shown in FIG. 8 may be implemented as an electronic device, such as the MSA in FIG. 1. As shown in FIG. 8, the electronic device may comprise: a processor 21 and a memory 22. The memory 22 is configured to store a program that supports the electronic device to execute the resource scheduling methods provided in the example embodiments shown in FIG. 2 and FIG. 4; and the processor 21 is configured to execute the program stored in the memory 22.

The program comprises one or a plurality of computer instructions which, when executed by the processor 21, implement the following steps:
sending, by a first cluster instance, to a second cluster instance a resource borrowing request if available resources owned by the first cluster instance is less than a threshold;
receiving borrowable resources information returned by the second cluster instance, wherein the borrowable resources information represents borrowable data server resources in the second cluster instance; and
acquiring, by the first cluster instance, the borrowable data server resources for data processing.

Optionally, the processor 21 is further configured to execute all or part of the steps in the foregoing example embodiments shown in FIG. 2 and FIG. 4.

The structure of the electronic device may further comprise a communication interface 23 for communicating with other devices or communication networks.

In addition, an example embodiment of the present invention provides a computer storage medium, configured to store computer software instructions used by an electronic device, wherein the computer storage medium comprises a program for executing the resource scheduling methods in the method example embodiments shown in FIG. 2 and FIG. 4.

FIG. 9 is a schematic structure diagram of another resource scheduling system according to an example embodiment of the present invention. As shown in FIG. 9, the system comprises at least a first cluster instance and a second cluster instance, wherein
the first cluster instance comprises a first metadata server and a plurality of first data servers; the second cluster instance comprises a second metadata server and a plurality of second data servers;
the first metadata server is configured to send to the second cluster instance a resource borrowing request if available resources owned by the first cluster instance is less than a threshold, and obtain borrowable data server resources determined by the second metadata server for data processing; and
the second metadata server is configured to, in response to the resource borrowing request, determine the borrowable data server resources in the second cluster instance.

Optionally, the first metadata server, the second metadata server, the plurality of first data servers, and the plurality of second data servers are further configured to execute all or some of the steps corresponding to each of the afore-mentioned example embodiments.

The apparatus example embodiments described above are only examples, wherein the units described as separate components may or may not be physically separated; and the components displayed as units may or may not be physical units; that is, the units may be located in one place, or may be distributed on a plurality of network units. Some or all of the modules may be selected according to actual needs to achieve the object of the solution of the example embodiments. Those of ordinary skill in the art may understand and implement the example embodiments without creative efforts.

Through the description of the above implementations, those skilled in the art may clearly understand that each implementation may be realized by means of a necessary general hardware platform, and may certainly be implemented by a combination of hardware and software. Based on such an understanding, the above technical solutions or the part of the technical solution, which is essential or contributes to the prior art, can be embodied in the form of a software product. The present invention may take the form of a computer program product which is embodied on one or more computer-usable storage media (including, but not limited to, disk storage, CD-ROM, optical storage, and so forth) having computer-usable program code included therein.

The present invention is described with reference to the flowcharts and/or block diagrams of the method, the device (system), and the computer program product according to the example embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or another programmable device to generate computer-implemented processing. Therefore, the instructions executed on the computer or another programmable device are used to provide steps for implementing a specific function in one or more processes in the flowcharts and/or in one or more blocks in the block diagrams.

In one typical configuration, a computer device comprises one or a plurality of processing units (CPUs), input/output interfaces, network interfaces, and memory.

A memory may include a volatile storage device on a computer-readable medium, a random-access memory (RAM), and/or a non-volatile memory, such as a read-only memory (ROM), or a flash memory (flash RAM). A memory is an example of the computer-readable medium.

Computer-readable media include both permanent and non-permanent, removable and non-removable media, and may store information by any method or technology. The information may be a computer readable instruction, a data structure, a module of a program, or other data. Examples of computer storage media include, but are not limited to, a phase change memory (PRAM), a static random access memory (SRAM), a dynamic random access memory (DRAM), other types of random access memories (RAMs), a read only memory (ROM), an electrically erasable programmable read-only memory (EEPROM), a flash memory or other memory technologies, a compact disk read-only memory (CD-ROM), a digital versatile disc (DVD) or other optical storage devices, a cassette type magnetic tape, a magnetic tape/magnetic disk storage or other magnetic storage devices or any other non-transmission medium, and may be used for storing information accessible by computing devices. As defined herein, the computer-readable media do not include transitory media, such as modulated data signals and carriers.

Finally, it should be noted that the above example embodiments are merely used for illustrating, rather than limiting, the technical solutions of the present invention. Although the present invention is described in detail with reference to the afore-mentioned example embodiments, it should be understood by those of ordinary skill in the art that modifications may still be made to the technical solutions described in the afore-mentioned example embodiments, or equivalent substitutions may be applied to part of the technical features therein insofar said modifications or substitutions do not enter in contradiction with the scope of the invention, which is defined by the appended claims.

## Claims

1. A resource scheduling method comprising:
sending (201; 501; 601), by a first cluster instance of a distributed file system cluster, to a second cluster instance of said distributed file system cluster a resource borrowing request in response to determining that available resources owned by the first cluster instance is less than a threshold;
receiving (202; 502; 603) borrowable resources information returned by the second cluster instance, the borrowable resources information representing borrowable data server resources in the second cluster instance, wherein the borrowable data server resources comprise storage capacity resources;
acquiring (203; 503; 604), by the first cluster instance, the borrowable data server resources for data processing; and
**characterized in that** the resource borrowing request comprises a service priority corresponding to the first cluster instance and expected resources information;
the service priority is used to enable the second cluster instance to determine, according to the service priority, whether to respond to the resource borrowing request of the first cluster instance when a resource borrowing request sent by another cluster instance is simultaneously received by the second cluster instance, wherein the second cluster instance determines to respond to the resource borrowing request with the highest service priority according to the service priority carried in each resource borrowing request; and
the expected resources information is used to enable the second cluster instance to determine the borrowable resources information conforming to the expected resources information.

2. The method according to the claim 1, wherein the acquiring (203, 503, 604), by the first cluster instance, the borrowable data server resources comprises:
determining that a registration request sent by a borrowable data server is received; and performing registration of the borrowable data server with the first cluster instance.

3. The method according to any of the preceding claims, further comprising:
migrating a portion of data block replicas in the first cluster instance to the borrowable data server resources.

4. The method according to any of the preceding claims, further comprising:
determining (401) that the available resources owned by the first cluster instance are restored to be higher than the threshold;
determining (401) a data server to be returned from the borrowable data servers;
determining (402) that a data block replica belonging to the first cluster instance in the data server to be returned needs to be migrated to another data server of the first cluster instance; and
migrating (402) the data block replica to the another data server.

5. The method according to claim 4, further comprising sending (403) to the data server to be returned a deregister notification.

6. One or more memories storing computer-readable instructions that, executable by one or more processors, cause the one or more processors to perform acts comprising:
receiving (201; 501; 601), by a second cluster instance of a distributed file system cluster, a resource borrowing request from a first cluster instance of said distributed file system cluster;
determining (202; 502; 602), by the second cluster instance, borrowable data server resources in the second cluster instance, wherein the borrowable data server resources comprise storage capacity resources; and
sending (202; 502; 503), by the second cluster instance, the borrowable data server resources to the first cluster instance for data processing; and
**characterized in that** the resource borrowing request comprises a service priority corresponding to the first cluster instance and expected resources information;
the service priority is used to enable the second cluster instance to determine, according to the service priority, whether to respond to the resource borrowing request of the first cluster instance when a resource borrowing request sent by another cluster instance is simultaneously received by the second cluster instance, wherein the second cluster instance determines to respond to the resource borrowing request with the highest service priority according to the service priority carried in each resource borrowing request; and
the expected resources information is used to enable the second cluster instance to determine the borrowable resources information conforming to the expected resources information.

7. The one or more memories according to claim 6, wherein:
after the determining (202; 502; 602), by the second cluster instance, the borrowable data server resources in the second cluster instance, the acts further comprise:
sending, by the second cluster instance, to a borrowable data server a borrowing notification.

8. The one or more memories according to claim 6 or 7, wherein the acts further comprises:
marking (602) the borrowable data server with a borrowed state, the borrowed state indicating that the first cluster instance has borrowed the borrowable data server.

9. The one or more memories according to any of the claims 6-8, wherein the act further comprise: receiving (403; 608) a deregister completed notification that deregisters the borrowable data server from the first cluster instance; and
deleting (609) a marking of the borrowed state.

10. The one or more memories according to any of the claims 6-9, wherein the acts further comprises:
sending, by the second cluster instance, to the first cluster instance a return instruction according to the marking of the borrowed state.

11. A system comprising:
a first cluster instance of a distributed file system cluster and a second cluster instance of said distributed file system cluster,
wherein:
the first cluster instance comprises a first metadata server and a plurality of first data servers; the second cluster instance comprises a second metadata server and a plurality of second data servers;
the first metadata server is configured to send (201; 501; 601)to the second cluster instance a resource borrowing request in response to determining that available resources owned by the first cluster instance is less than a threshold, and acquire (203; 503; 604) borrowable data server resources determined by the second metadata server for data processing, wherein the borrowable data server resources comprise storage capacity resources; and
the second metadata server is configured to, in response to the resource borrowing request, determine (202; 502; 602) the borrowable data server resources in the second cluster instance; and
**characterized in that** the resource borrowing request comprises a service priority corresponding to the first cluster instance and expected resources information;
the service priority is used to enable the second cluster instance to determine, according to the service priority, whether to respond to the resource borrowing request of the first cluster instance when a resource borrowing request sent by another cluster instance is simultaneously received by the second cluster instance, wherein the second cluster instance determines to respond to the resource borrowing request with the highest service priority according to the service priority carried in each resource borrowing request; instance and
the expected resources information is used to enable the second cluster instance to determine the borrowable resources information conforming to the expected resources information.

12. The system according to claim 11, wherein:
the second cluster instance is configured to send to a borrowable data server a borrowing notification;
the borrowable data server is configured to send to the first cluster instance a registration request in response to the borrowing notification; and
the first cluster instance is configured to perform, according to the registration request, registration of the borrowable data server with the first cluster instance.

13. The system according to the claims 11 or 12, wherein:
the second cluster instance is configured to mark (602) the borrowable data server with a borrowed state, wherein the borrowed state indicates that the first cluster instance has borrowed the borrowable data server.

14. The system according to claim 13, wherein:
the data server to be returned is configured to send (403; 608) to the second cluster instance a deregister completed notification; and
the second cluster instance is configured to delete (609) a marking of the borrowed state.

## Patentansprüche

1. Ressourcenplanungsverfahren, umfassend:
Senden (201; 501; 601), durch eine erste Clusterinstanz eines Clusters eines verteilten Dateisystems, an eine zweite Clusterinstanz des Clusters des verteilten Dateisystems, einer Ressourcenleihanforderung als Reaktion auf ein Bestimmen, dass verfügbare Ressourcen, die der ersten Clusterinstanz gehören, kleiner als ein Schwellenwert sind;
Empfangen (202; 502; 603) von leihbaren Ressourceninformationen, die durch die zweite Clusterinstanz zurückgegeben werden, wobei die leihbaren Ressourceninformationen leihbare Datenserverressourcen in der zweiten Clusterinstanz darstellen, wobei die leihbaren Datenserverressourcen Speicherungskapazitätsressourcen umfassen;
Erfassen (203; 503; 604), durch die erste Clusterinstanz, der leihbaren Datenserverressourcen für eine Datenverarbeitung; und
**dadurch gekennzeichnet, dass** die Ressourcenleihanforderung eine Dienstpriorität umfasst, die der ersten Clusterinstanz und erwarteten Ressourceninformationen entspricht;
die Dienstpriorität verwendet wird, um zu ermöglichen, dass die zweite Clusterinstanz gemäß der Dienstpriorität bestimmt, ob auf die Ressourcenleihanforderung der ersten Clusterinstanz reagiert wird, wenn eine durch eine andere Clusterinstanz gesendete Ressourcenleihanforderung gleichzeitig durch die zweite Clusterinstanz empfangen wird, wobei die zweite Clusterinstanz bestimmt, auf die Ressourcenleihanforderung mit der höchsten Dienstpriorität gemäß der Dienstpriorität zu reagieren, die in jeder Ressourcenleihanforderung getragen wird; und
die erwarteten Ressourceninformationen verwendet werden, um zu ermöglichen, dass die zweite Clusterinstanz die leihbaren Ressourceninformationen, die mit den erwarteten Ressourceninformationen übereinstimmen, bestimmt.

2. Verfahren nach Anspruch 1, wobei das Erfassen (203, 503, 604), durch die erste Clusterinstanz, der leihbaren Datenserverressourcen umfasst:
Bestimmen, dass eine Registrierungsanforderung, die durch einen leihbaren Datenserver gesendet wird, empfangen wird; und Durchführen einer Registrierung des leihbaren Datenservers mit der ersten Clusterinstanz.

3. Verfahren nach einem der vorstehenden Ansprüche, ferner umfassend:
Migrieren eines Anteils von Datenblockreplikationen in der ersten Clusterinstanz zu den leihbaren Datenserverressourcen.

4. Verfahren nach einem der vorstehenden Ansprüche, ferner umfassend:
Bestimmen (401), dass die verfügbaren Ressourcen, die der ersten Clusterinstanz gehören, wiederhergestellt werden, um höher als der Schwellenwert zu sein;
Bestimmen (401) eines Datenservers, der von den leihbaren Datenservern zurückgegeben werden soll;
Bestimmen (402), dass eine Datenblockreplikation, die zu der ersten Clusterinstanz in dem Datenserver gehört, der zurückgegeben werden soll, zu einem anderen Datenserver der ersten Clusterinstanz migriert werden muss; und
Migrieren (402) der Datenblockreplikation zu dem anderen Datenserver.

5. Verfahren nach Anspruch 4, ferner umfassend das Senden (403) an den Datenserver, der zurückgegeben werden soll, einer Abmeldebenachrichtigung.

6. Ein oder mehrere Speicher, die computerlesbare Anweisungen speichern, die, ausführbar durch einen oder mehrere Prozessoren, bewirken, dass der eine oder die mehreren Prozessoren Handlungen durchführen, umfassend:
Empfangen (201; 501; 601), durch eine zweite Clusterinstanz eines Clusters des verteilten Dateisystems, einer Ressourcenleihanforderung von einer ersten Clusterinstanz des Clusters des verteilten Dateisystems;
Bestimmen (202; 502; 602), durch die zweite Clusterinstanz, von leihbaren Datenserverressourcen in der zweiten Clusterinstanz, wobei die leihbaren Datenserverressourcen Speicherungskapazitätsressourcen umfassen; und
Senden (202; 502; 503), durch die zweite Clusterinstanz, der leihbaren Datenserverressourcen an die erste Clusterinstanz für die Datenverarbeitung; und
**dadurch gekennzeichnet, dass** die Ressourcenleihanforderung eine Dienstpriorität umfasst, die der ersten Clusterinstanz und erwarteten Ressourceninformationen entspricht;
die Dienstpriorität verwendet wird, um zu ermöglichen, dass die zweite Clusterinstanz gemäß der Dienstpriorität bestimmt, ob auf die Ressourcenleihanforderung der ersten Clusterinstanz reagiert wird, wenn eine durch eine andere Clusterinstanz gesendete Ressourcenleihanforderung gleichzeitig durch die zweite Clusterinstanz empfangen wird, wobei die zweite Clusterinstanz bestimmt, auf die Ressourcenleihanforderung mit der höchsten Dienstpriorität gemäß der Dienstpriorität zu reagieren, die in jeder Ressourcenleihanforderung getragen wird; und
die erwarteten Ressourceninformationen verwendet werden, um zu ermöglichen, dass die zweite Clusterinstanz die leihbaren Ressourceninformationen, die mit den erwarteten Ressourceninformationen übereinstimmen, bestimmt.

7. Ein oder mehrere Speicher nach Anspruch 6, wobei:
nach dem Bestimmen (202; 502; 602), durch die zweite Clusterinstanz, der leihbaren Datenserverressourcen in der zweiten Clusterinstanz, die Handlungen ferner umfassen:
Senden, durch die zweite Clusterinstanz, einer Leihbenachrichtigung an einen leihbaren Datenserver.

8. Ein oder mehrere Speicher nach Anspruch 6 oder 7, wobei die Handlungen ferner umfassen:
Markieren (602) des leihbaren Datenservers mit einem geliehenen Zustand, wobei der geliehene Zustand angibt, dass die erste Clusterinstanz den leihbaren Datenserver geliehen hat.

9. Ein oder mehrere Speicher nach einem der Ansprüche 6 bis 8, wobei die Handlung ferner umfasst: Empfangen (403; 608) einer Benachrichtigung zur abgeschlossenen Abmeldung, die den leihbaren Datenserver von der ersten Clusterinstanz abmeldet; und
Löschen (609) einer Markierung des geliehenen Zustands.

10. Ein oder mehrere Speicher nach einem der Ansprüche 6 bis 9, wobei die Handlungen ferner umfassen:
Senden, durch die zweite Clusterinstanz, einer Rückgabeanweisung gemäß der Markierung des geliehenen Zustands an die erste Clusterinstanz.

11. System, umfassend:
eine erste Clusterinstanz eines Clusters des verteilten Dateisystems und eine zweite Clusterinstanz des Clusters des verteilten Dateisystems,
wobei:
die erste Clusterinstanz einen ersten Metadatenserver und eine Vielzahl von ersten Datenservern umfasst; die zweite Clusterinstanz einen zweiten Metadatenserver und eine Vielzahl von zweiten Datenservern umfasst;
der erste Metadatenserver konfiguriert ist, um eine Ressourcenleihanforderung an die zweite Clusterinstanz als Reaktion auf das Bestimmen zu senden (201; 501; 601), dass verfügbare Ressourcen, die der ersten Clusterinstanz gehören, kleiner als ein Schwellenwert sind, und leihbare Datenserverressourcen zu erfassen (203; 503; 604), die durch den zweiten Metadatenserver für die Datenverarbeitung bestimmt werden, wobei die leihbaren Datenserverressourcen Speicherkapazitätsressourcen umfassen; und
der zweite Metadatenserver konfiguriert ist, um die leihbaren Datenserverressourcen in der zweiten Clusterinstanz als Reaktion auf die Ressourcenleihanforderung zu bestimmen (202; 502; 602); und
**dadurch gekennzeichnet, dass** die Ressourcenleihanforderung eine Dienstpriorität umfasst, die der ersten Clusterinstanz und erwarteten Ressourceninformationen entspricht;
die Dienstpriorität verwendet wird, um zu ermöglichen, dass die zweite Clusterinstanz gemäß der Dienstpriorität bestimmt, ob auf die Ressourcenleihanforderung der ersten Clusterinstanz reagiert wird, wenn eine durch eine andere Clusterinstanz gesendete Ressourcenleihanforderung gleichzeitig durch die zweite Clusterinstanz empfangen wird, wobei die zweite Clusterinstanz bestimmt, auf die Ressourcenleihanforderung mit der höchsten Dienstpriorität gemäß der Dienstpriorität zu reagieren, die in jeder Ressourcenleihanforderung getragen wird; und
die erwarteten Ressourceninformationen verwendet werden, um zu ermöglichen, dass die zweite Clusterinstanz die leihbaren Ressourceninformationen, die mit den erwarteten Ressourceninformationen übereinstimmen, bestimmt.

12. System nach Anspruch 11, wobei:
die zweite Clusterinstanz konfiguriert ist, um eine Leihbenachrichtigung an einen leihbaren Datenserver zu senden;
der leihbare Datenserver ist konfiguriert, um eine Registrierungsanforderung an die erste Clusterinstanz als Reaktion auf die Leihbenachrichtigung zu senden; und
die erste Clusterinstanz konfiguriert ist, um gemäß der Registrierungsanforderung eine Registrierung des leihbaren Datenservers mit der ersten Clusterinstanz durchzuführen.

13. System nach den Ansprüchen 11 oder 12, wobei:
die zweite Clusterinstanz konfiguriert ist, um den leihbaren Datenserver mit einem geliehen Zustand zu markieren (602), wobei der geliehene Zustand angibt, dass die erste Clusterinstanz den leihbaren Datenserver geliehen hat.

14. System nach Anspruch 13, wobei:
der Datenserver, der zurückgegeben werden soll, konfiguriert ist, um eine Benachrichtigung zur abgeschlossenen Abmeldung an die zweite Clusterinstanz zu senden (403; 608); und
die zweite Clusterinstanz konfiguriert ist, um eine Markierung des geliehen Zustands zu löschen (609).

## Revendications

1. Procédé de planification de ressources comprenant :
l'envoi (201 ; 501 ; 601), par une première instance de cluster d'un cluster de système de fichiers distribué, à une seconde instance de cluster dudit cluster de système de fichiers distribué, d'une demande d'emprunt de ressources en réponse à la détermination que des ressources disponibles appartenant à la première instance de cluster sont inférieures à un seuil ;
la réception (202 ; 502 ; 603) d'informations de ressources empruntables renvoyées par la seconde instance de cluster, les informations de ressources empruntables représentant des ressources de serveurs de données empruntables dans la seconde instance de cluster, les ressources de serveurs de données empruntables comprenant des ressources de capacité de stockage ;
l'acquisition (203 ; 503 ; 604), par la première instance de cluster, des ressources de serveurs de données empruntables pour un traitement de données ; et
**caractérisé en ce que** la demande d'emprunt de ressources comprend une priorité de service correspondant à la première instance de cluster et des informations de ressources attendues ;
la priorité de service est utilisée pour permettre à la seconde instance de cluster de déterminer, selon la priorité de service, s'il faut répondre à la demande d'emprunt de ressources de la première instance de cluster lorsqu'une demande d'emprunt de ressources envoyée par une autre instance de cluster est simultanément reçue par la seconde instance de cluster, la seconde instance de cluster déterminant de répondre à la demande d'emprunt de ressources avec la priorité de service la plus élevée selon la priorité de service transportée dans chaque demande d'emprunt de ressources ; et
les informations de ressources attendues sont utilisées pour permettre à la seconde instance de cluster de déterminer les informations de ressources empruntables répondant aux informations de ressources attendues.

2. Procédé selon la revendication 1, dans lequel l'acquisition (203, 503, 604), par la première instance de cluster, des ressources de serveurs de données empruntables comprend :
la détermination qu'une demande d'enregistrement envoyée par un serveur de données empruntable est reçue ; et la mise en oeuvre d'un enregistrement du serveur de données empruntable auprès de la première instance de cluster.

3. Procédé selon l'une quelconque des revendications précédentes, comprenant en outre :
la migration d'une partie de répliques de bloc de données dans la première instance de cluster vers les ressources de serveurs de données empruntables.

4. Procédé selon l'une quelconque des revendications précédentes, comprenant en outre :
la détermination (401) que les ressources disponibles appartenant à la première instance de cluster sont restaurées pour être supérieures au seuil ;
la détermination (401) d'un serveur de données à renvoyer parmi les serveurs de données empruntables ;
la détermination (402) qu'une réplique de bloc de données appartenant à la première instance de cluster dans le serveur de données à renvoyer doit être migrée vers un autre serveur de données de la première instance de cluster ; et
la migration (402) de la réplique de bloc de données vers cet autre serveur de données.

5. Procédé selon la revendication 4, comprenant en outre l'envoi (403) au serveur de données à renvoyer d'une notification de désenregistrement.

6. Mémoire(s) stockant des instructions lisibles par ordinateur qui, exécutables par un ou plusieurs processeurs, amènent le ou les processeurs à mettre en oeuvre des actions comprenant :
la réception (201 ; 501 ; 601), par une seconde instance de cluster d'un cluster de système de fichiers distribué, d'une demande d'emprunt de ressources provenant d'une première instance de cluster dudit cluster de système de fichiers distribué ;
la détermination (202 ; 502 ; 602), par la seconde instance de cluster, de ressources de serveurs de données empruntables dans la seconde instance de cluster, les ressources de serveurs de données empruntables comprenant des ressources de capacité de stockage ; et
l'envoi (202 ; 502 ; 503), par la seconde instance de cluster, des ressources de serveurs de données empruntables à la première instance de cluster pour un traitement de données ; et
**caractérisé en ce que** la demande d'emprunt de ressources comprend une priorité de service correspondant à la première instance de cluster et des informations de ressources attendues ;
la priorité de service est utilisée pour permettre à la seconde instance de cluster de déterminer, selon la priorité de service, s'il faut répondre à la demande d'emprunt de ressources de la première instance de cluster lorsqu'une demande d'emprunt de ressources envoyée par une autre instance de cluster est simultanément reçue par la seconde instance de cluster, la seconde instance de cluster déterminant de répondre à la demande d'emprunt de ressources avec la priorité de service la plus élevée selon la priorité de service transportée dans chaque demande d'emprunt de ressources ; et
les informations de ressources attendues sont utilisées pour permettre à la seconde instance de cluster de déterminer les informations de ressources empruntables répondant aux informations de ressources attendues.

7. Mémoire(s) selon la revendication 6, dans laquelle/lesquelles :
après la détermination (202 ; 502 ; 602), par la seconde instance de cluster, des ressources de serveurs de données empruntables dans la seconde instance de cluster, les actions comprennent en outre :
l'envoi, par la seconde instance de cluster, à un serveur de données empruntable, d'une notification d'emprunt.

8. Mémoire(s) selon la revendication 6 ou 7, dans laquelle/lesquelles les actions comprennent en outre :
le marquage (602) du serveur de données empruntable avec un état emprunté, l'état emprunté indiquant que la première instance de cluster a emprunté le serveur de données empruntable.

9. Mémoire(s) selon l'une quelconque des revendications 6 à 8, dans laquelle/lesquelles les actions comprennent en outre : la réception (403 ; 608) d'une notification de désenregistrement achevé qui désenregistre le serveur de données empruntable de la première instance de cluster ; et
la suppression (609) d'un marquage de l'état emprunté.

10. Mémoire(s) selon l'une quelconque des revendications 6 à 9, dans laquelle/lesquelles les actions comprennent en outre :
l'envoi, par la seconde instance de cluster, à la première instance de cluster d'une instruction de renvoi selon le marquage de l'état emprunté.

11. Système comprenant :
une première instance de cluster d'un cluster de système de fichiers distribué et une seconde instance de cluster dudit cluster de système de fichiers distribué,
dans lequel :
la première instance de cluster comprend un premier serveur de métadonnées et une pluralité de premiers serveurs de données ; la seconde instance de cluster comprend un second serveur de métadonnées et une pluralité de seconds serveurs de données ;
le premier serveur de métadonnées est configuré pour envoyer (201 ; 501 ; 601) à la seconde instance de cluster une demande d'emprunt de ressources en réponse à la détermination que des ressources disponibles appartenant à la première instance de cluster sont inférieures à un seuil, et acquérir (203 ; 503 ; 604) des ressources de serveurs de données empruntables déterminées par le second serveur de métadonnées pour un traitement de données, les ressources de serveurs de données empruntables comprenant des ressources de capacité de stockage ; et
le second serveur de métadonnées est configuré pour, en réponse à la demande d'emprunt de ressources, déterminer (202 ; 502 ; 602) les ressources de serveurs de données empruntables dans la seconde instance de cluster ; et
**caractérisé en ce que** la demande d'emprunt de ressources comprend une priorité de service correspondant à la première instance de cluster et des informations de ressources attendues ;
la priorité de service est utilisée pour permettre à la seconde instance de cluster de déterminer, selon la priorité de service, s'il faut répondre à la demande d'emprunt de ressources de la première instance de cluster lorsqu'une demande d'emprunt de ressources envoyée par une autre instance de cluster est simultanément reçue par la seconde instance de cluster, la seconde instance de cluster déterminant de répondre à la demande d'emprunt de ressources avec la priorité de service la plus élevée selon la priorité de service transportée dans chaque demande d'emprunt de ressources ; et
les informations de ressources attendues sont utilisées pour permettre à la seconde instance de cluster de déterminer les informations de ressources empruntables répondant aux informations de ressources attendues.

12. Système selon la revendication 11, dans lequel :
la seconde instance de cluster est configurée pour envoyer à un serveur de données empruntable une notification d'emprunt ;
le serveur de données empruntable est configuré pour envoyer à la première instance de cluster une demande d'enregistrement en réponse à la notification d'emprunt ; et
la première instance de cluster est configurée pour mettre en oeuvre, selon la demande d'enregistrement, un enregistrement du serveur de données empruntable auprès de la première instance de cluster.

13. Système selon les revendications 11 ou 12, dans lequel :
la seconde instance de cluster est configurée pour marquer (602) le serveur de données empruntable avec un état emprunté, l'état emprunté indiquant que la première instance de cluster a emprunté le serveur de données empruntable.

14. Système selon la revendication 13, dans lequel :
le serveur de données à renvoyer est configuré pour envoyer (403 ; 608) à la seconde instance de cluster une notification de désenregistrement achevé ; et
la seconde instance de cluster est configurée pour supprimer (609) un marquage de l'état emprunté.
